# EUROPÄISCHE PATENTANMELDUNG

(11) **EP 1 863 151 A2**
(43) Veröffentlichungstag der Anmeldung: **05.12.2007**
(21) Anmeldenummer: 07010473.2
(22) Anmeldetag: 25.05.2007
(51) Int. Cl.: H02K 5/08

(54) **Rohmotor**

(30) Priorität: 01.06.2006 DE 102006028641
(71) Anmelder: Gerhard Geiger GmbH & Co., 74321 Bietigheim-Bissingen (DE)
(72) Erfinder: Dangel, Hans-Michael, 74321 Bietigheim-Bissingen (DE)
(74) Vertreter: Jeck, Anton

(57) **Zusammenfassung**

Die Erfindung betrifft einen Rohrmotor, insbesondere zur Unterbringung in Wickelrohren von Rollläden, mit einem Außengehäuse aus Verbundwerkstoff, das mindestens zwei miteinander verbundene Rohrelemente aufweist, von denen das externe Rohrelement aus Kunststoff besteht. Das interne Rohrelement ist zumindest über einen Teil der Länge des Rohrmotors erstreckt und als Stahlrohr mit einer gegenüber der Stärke des der Teillänge entsprechenden Rohrteils des externen Rohrs wesentlich geringeren Stärke ausgebildet.

## Beschreibung

Die Erfindung betrifft einen Rohrmotor, insbesondere für Rollladenantriebe, gemäß dem Oberbegriff des Anspruchs 1.

Solche Rohrmotoren werden oft in Wickelrohren von Rollläden, Jalousien oder ähnlichen aufwickelbaren Sonnen- bzw. Regenschutzdächern verwendet und weisen ein rohrförmiges Außengehäuse auf. Dieses Außengehäuse ist gewöhnlich aus einem metallischen Werkstoff, vorwiegend Stahl, gefertigt. Das Stahlgehäuse verbessert dabei die elektromagnetischen Eigenschaften des Rohrmotors wesentlich.

Durch die DE 297 02 603 U1 ist ein Rohrmotor für Rollläden, Vorhänge oder dergleichen bekannt, bei dem das Motoraußengehäuse aus Kunststoff besteht. Dieses Kunststoffrohr ist zwar im Gießverfahren oder Spritzgussverfahren mit seinen endseitig angeordneten Lagertragwangen einfacher und billiger herzustellen, doch verschlechtern sich die elektromagnetischen Eigenschaften des Motors. Außerdem müssen solche Kunststoffaußengehäuse, wenn sie stabil sein sollen, eine erhebliche Wandstärke aufweisen. Dies führt zu einer schlechteren Wärmeabfuhr und damit zu einem früheren Abschalten des Rohrmotors durch den Thermoschutz.

Durch die WO 2006/006057 A1 ist ferner ein Rohrmotor der im Oberbegriff des Anspruchs 1 genannten Art bekannt, dessen Außengehäuse aus Verbundwerkstoff hergestellt ist. Das Außengehäuse besteht insbesondere aus zwei Rohrelementen, von denen das externe Rohrelement aus thermoplastischem Elastomer und das interne Rohrelement aus einem mit Glasfasern, Kohlefasern und/oder synthetischen Fasern verstärkten, duroplastischen Harz bestehen kann. Dieses Harz kann vorzugsweise Epoxid oder Polyester sein. Mit einem solchen Außengehäuse wird die Verformbarkeit des Gehäuses vermindert und dessen Stabilität erhöht, ohne die Herstellungskosten gegenüber einem einfachen Kunststoffrohr als Außengehäuse wesentlich zu erhöhen. Ein Nachteil besteht aber auch hier in den verschlechterten elektromagnetischen Eigenschaften des Rohrmotors.

Die Aufgabe der Erfindung besteht daher darin einen Rohrmotor der im Oberbegriff des Anspruchs 1 genannten Art zu schaffen, dessen Herstellungskosten gering sind und dessen elektromagnetische Eigenschaften erhalten bleiben.

Diese Aufgabe wird mit den Merkmalen des Anspruchs 1 gelöst.

Mit dem gemäß der Erfindung gestalteten Außenrohr werden auch eine gute Wärmeableitung und eine einfache, freie Gestaltung der geometrischen Form ermöglicht.

Gemäß einer weiteren Ausbildung der Erfindung beträgt vorzugsweise die Stärke des externen Rohrelements 2,0 mm und die des internen Rohrelements 0,5 mm.

Gemäß einer weiteren Ausbildung der Erfindung sind an den Enden des externen Rohrelements jeweils ein oder mehrere Aussparungen zur formschlüssigen Verbindung mit weiteren elementaren Bauteilen des Rohrmotors vorgesehen. Solche Bauteile können beispielsweise Getriebe, Endabschaltung, Lagerschilde für den Abtrieb usw. sein.

Gemäß einer weiteren Ausbildung der Erfindung sind an den Enden des externen Rohrelements jeweils ein oder mehrere Ausnehmungen bzw. Vorsprünge zur axialen Sicherung der in das Außengehäuse (1) montierten Bauteile.

Gemäß einer weiteren Ausbildung der Erfindung sind die Ausnehmungen bzw. Vorsprünge Teile von Schnappverbindungen.

Die Erfindung wird nun anhand eines Ausführungsbeispiels näher erläutert. Es zeigen:

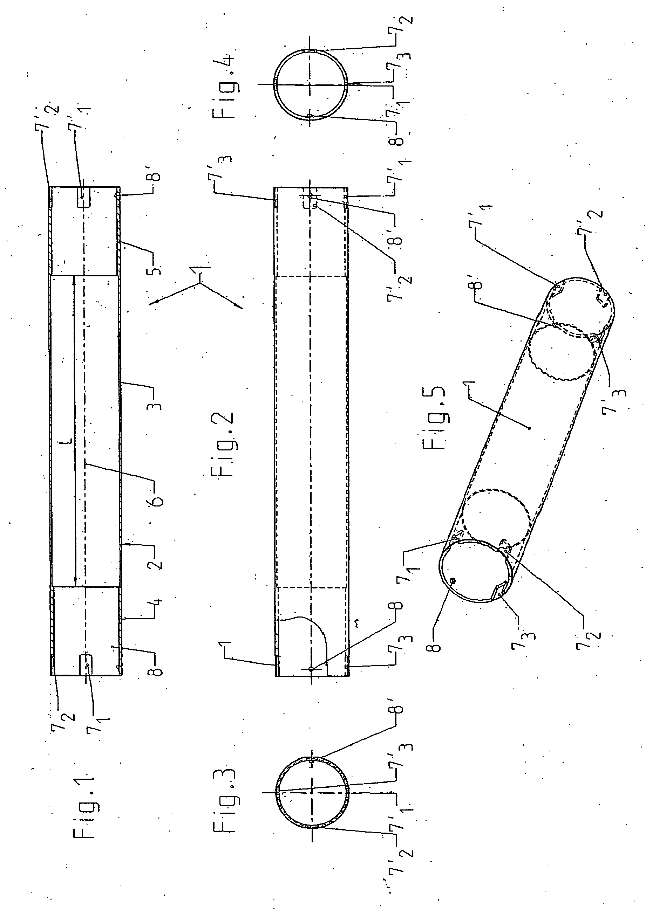

- Fig. 1: einen Längsschnitt durch ein Außengehäuse eines Rohrmotors für einen Rollladenantrieb gemäß der Erfindung,
- Fig. 2: eine gegenüber der Fig. 1 um 90° gedrehte Seitenansicht des Außengehäuses mit einem Teilschnitt am linken Ende,
- Fig. 3: eine Stirnansicht des Außengehäuses der Fig. 2 von rechts,
- Fig. 4: eine Stirnansicht des Außengehäuses der Fig. 2 von links und
- Fig. 5: eine verkleinerte, perspektivische Ansicht des Außengehäuses der Fig. 2.

Das in den Figuren dargestellte Außengehäuse 1 ist ein Rohr aus Verbundwerkstoff. Es besteht aus einem externen Rohrelement 2 aus Kunststoff und einem mit diesem verbundenen, internen Rohrelement 6 aus Stahl. Das Rohrelement 6 nimmt nur eine mittlere Teillänge L des Außengehäuses 1 ein und überdeckt damit hauptsächlich den nicht dargestellten Stator und den Rotor des Rohrmotors. Im Bereich der Teillänge L beträgt die Stärke des zugehörigen Rohrteils 3 des externen Rohrelements 2 vorzugsweise 1,5 mm, während das Rohrelement 6 aus Stahl vorzugsweise nur eine Stärke von 0,5 mm aufweist. Die stärkeren Endteile 4 und 5 haben eine Stärke von 2,0 mm.

Die stärkeren Endteile 4 und 5 des externen Rohrelements 2 weisen an ihren Enden jeweils drei rechteckförmige Aussparungen 7₁, 7₂, 7₃ bzw. 7'₁, 7'₂, 7'₃ auf, die auf dem Umfang um 90° verteilt sind. Diese Aussparungen sind zur formschlüssigen Verbindung mit weiteren elementaren Bauteilen des Rohrmotors vorgesehen. Diese Bauteile können beispielsweise Getriebe, Endabschaltung, Lagerschilde für den Abtrieb usw. sein. Ferner sind die Endteile 4 und 5 des externen Rohrelements 2 in ihren Endbereichen innen jeweils mit einem Vorsprung 8 bzw. 8' versehen. Diese Vorsprünge sind vorzugsweise Teile von Schnappverbindungen, die der axialen Sicherung der in das Außengehäuse (1) montierten Bauteile dienen können.

Das derart aus Verbundwerkstoff bestehende Außenrohr des Rohrmotors kann in einem Arbeitsgang hergestellt werden und weist folgende Vorteile auf:
- durch das Stahlrohrelement verbessern sich die elektromagnetischen Werte des Rohrmotors,
- durch das Stahlrohrelement erhöht sich die Steifigkeit des Außengehäuses,
- durch das Stahlrohrelement wird eine maßgenaue Lagerung des Stators erreicht,
- durch eine geschickte, geometrische Ausgestaltung des Außengehäuses ist eine Verdrehsicherung einfach erreichbar,
- eine gute elektrische Isolierung ohne Erdung ist möglich,
- eine einfach zu erstellende Verbindung zu einer längsseitigen Sicherung des Außengehäuses ist möglich,
- eine freie Ausgestaltung einer Schnappverbindung ist möglich,
- ein Außenflächenschutz des Stahlrohrelements ist erreichbar und
- durch entsprechende Werkstoffauswahl ist eine Kosteneinsparung erreichbar.

## Patentansprüche

1. Rohrmotor, insbesondere zur Unterbringung in Wickelrohren von Rollläden, mit einem Außengehäuse aus Verbundwerkstoff, das mindestens zwei miteinander verbundene Rohrelemente (2, 6) aufweist, von denen das externe Rohrelement (2) aus Kunststoff besteht,
**dadurch gekennzeichnet,**
**dass** sich das interne Rohrelement (6) zumindest über einen Teil (L) der Länge des Rohrmotors erstreckt und als Stahlrohr mit einer gegenüber der Stärke des der Teillänge (L) entsprechenden Rohrteils (3) des externen Rohrs (2) wesentlich geringeren Stärke ausgebildet ist.

2. Rohrmotor nach Anspruch 1,
**dadurch gekennzeichnet,**
**dass** die Stärke des Rohrteils (3) des externen Rohrelements (2) 1,5 mm und die des internen Rohrelements (6) 0,5 mm beträgt.

3. Rohrmotor nach Anspruch 1 oder 2,
**dadurch gekennzeichnet,**
**dass** das externe Rohrelement (2) durch Umspritzen des internen Rohrelements (6) eines thermoplastischen Kunststoffes im Spritzgussverfahren hergestellt wird.

4. Rohrmotor nach Anspruch 1, 2 oder 3,
**dadurch gekennzeichnet,**
**dass** an den Enden des externen Rohrelements (2) jeweils ein oder mehrere Aussparungen (7₁-7₃, 7'₁-7'₃) zur formschlüssigen Verbindung mit weiteren elementaren Bauteilen des Rohrmotors vorgesehen sind.

5. Rohrmotor nach einem der Ansprüche 1 bis 4,
**dadurch gekennzeichnet,**
**dass** an den Enden des externen Rohrelements (2) jeweils ein oder mehrere Ausnehmungen bzw. Vorsprünge (8, 8') zur axialen Sicherung des Außengehäuses (1) vorgesehen sind.

6. Rohrmotor nach Anspruch 5,
**dadurch gekennzeichnet,**
**dass** die Ausnehmungen bzw. Vorsprünge (8, 8') Teile von Schnappverbindungen sind.
